# EUROPÄISCHE PATENTSCHRIFT

(11) **EP 0 472 515 B1**
(45) Veröffentlichungstag und Bekanntmachung des Hinweises auf die Patenterteilung: **06.10.1993**
(21) Anmeldenummer: 91890179.4
(22) Anmeldetag: 12.08.1991
(51) Int. Cl.: F02M 55/02, F02M 55/00, F16L 5/02

(54) **Brennkraftmaschine mit einer Rohrleitungsdurchführung aus dem Ölraum**
Internal combustion engine with pipeline passage from the oil space
Moteur à combustion interne avec un guide de canalisation venant de la chambre d'huile

(30) Priorität: 22.08.1990 AT 1731/90
(43) Veröffentlichungstag der Anmeldung: 26.02.1992
(73) Patentinhaber: AVL Gesellschaft für Verbrennungskraftmaschinen und Messtechnik mbH.Prof.Dr.Dr.h.c. Hans List, 8020 Graz (AT)
(72) Erfinder: Kirchweger, Karl, A-8010 Graz (AT); Kling, Wolfgang, A-8010 Graz (AT); Affenzeller, Josef, Dr. Dipl.-Ing., A-8045 Graz (AT)
(74) Vertreter: Krause, Walter, Dr. Dipl.-Ing.

(56) Entgegenhaltungen:
- DE-C- 3 736 778
- FR-A- 2 131 544
- FR-A- 2 289 746
- US-A- 3 402 703

## Beschreibung

Die Erfindung bezieht sich auf eine Brennkraftmaschine mit einem durch einen ersten Bauteil und einem mit diesem lösbar verbundenen zweiten Bauteil gebildeten Ölraum und einer aus dem Ölraum führenden Rohrleitung, welche eine Innenleitung und eine Außenleitung umfaßt, die über einen Nippel miteinander verbunden sind, wobei die Außenleitung mittels einer Überwurfmutter-Verschraubung am Nippel befestigt ist, und wobei der Nippel abgedichtet in einen Wanddurchbruch am Rande des ersten Bauteils eingesetzt ist.

Aus der US-PS 3 402 703 ist eine Brennkraftmaschine dieser Art bekannt, bei welcher die Rohrleitungsdurchführung in einem der Bauteile angeordnet ist, wobei die Rohrleitung die Außenwand dieses Bauteils durchsetzt und an dieser Stelle gegenüber dem Gehäuseteil abgedichtet ist. Dazu muß die Bohrung im Bauteil so groß sein, daß der Schraubnippel für die aupenliegende Überwurfmutter-Verschraubung durchgesteckt werden kann. Dadurch wird insbesondere der Zeitaufwand für die Montage und Demontage der durchzuführenden Rohrleitung erheblich. Aufgabe der Erfindung ist es, die Rohrleitungsdurchführung so zu gestalten, daß der Arbeitsaufwand für die Montage und Demontage wesentlich verringert wird, wobei die Herstellungskosten der verwendeten Teile zumindestens nicht größer sein soll, als bisher.

Erfindungsgemäß ist die Aufgabe dadurch gelöst, daß der Wanddurchbruch als U-förmige Ausnehmung, ausgehend vom Rand des ersten Bauteiles, ausgebildet ist, daß am Nippel ein zylindrisches, elastisches Dichtungsteil mit einem U-förmigen Querschnitt in die entsprechende U-förmige Ausnehmung des ersten Bauteiles eingesetzt und durch den korrespondierenden Rand des zweiten Bauteiles festgehalten ist, und eine Sicherung gegen Verdrehen des Nippels gegenüber dem ersten Bauteil vorgesehen ist. Hiebei gestaltet sich vorteilhaft sowohl die Montage als auch Demontage äußerst einfach, weil die durchzuführende Rohrleitung samt Dichtung und Nippel für die Überwurfmutter- Verschraubung bei der Montage nur von oben eingesetzt werden braucht, wobei dann die abgedichtete Durchführung durch Verbindung des ersten und zweiten Bauteiles in einfacher Weise fertiggestellt wird.

Die Sicherung gegen Verdrehen des Nippels gegenüber dem ersten Bauteil geschieht in weiterer Ausgestaltung der Erfindung vorteilhaft durch einen Stift im ersten Bauteil und einen lappenförmigen Ansatz des Nippels mit einem den Stift teilweise umgreifenden Schlitz. Die Demontage der Rohrleitungsdurchführung geschieht nach Lösung der beiden Bauteile in einfacher Weise durch Hochziehen der Durchführungsleitung samt Dichtung und Verdrehsicherung.

Eine vorteilhaft in Höhenrichtung platzsparende Ausführung wird in weiterer Ausgestaltung der Erfindung dadurch erreicht, daß der erste Bauteil ein Zylinderkopf und der zweite Bauteil ein Zylinderkopfdeckel ist, daß im Ölraum je eine Nockenwelle zur Betätigung der Ein- und Auslaßventile an beiden Seiten eines Düsenhalters vorgesehen ist, dessen Druck- und Leckölleitung nebeneinander im Bereich der Nocken zwischen Zylinderkopf und -deckel durchgeführt sind, wobei die Druckleitung zwischen den Nocken und die Leckölleitung knapp über den Nocken angeordnet sind.

Die Erfindung wird nachfolgend anhand eines Ausführungsbeispieles näher erläutert. Es zeigen:

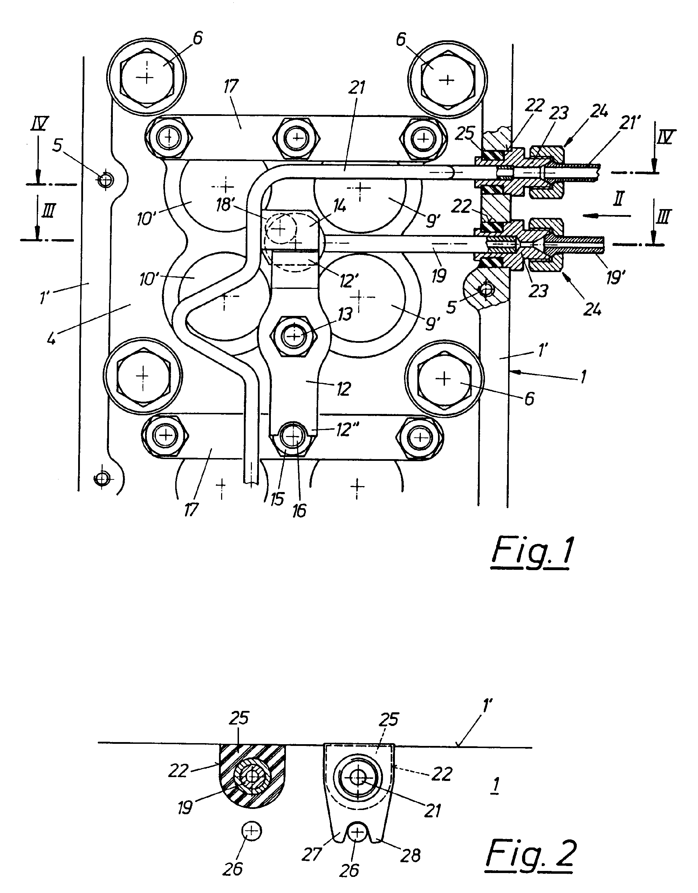

- Fig. 1: eine Draufsicht auf den Zylinderkopf einer erfindungsgemäßen Brennkraftmaschine,
- Fig. 2: eine Ansicht in Richtung des Pfeiles II in Fig. 1,

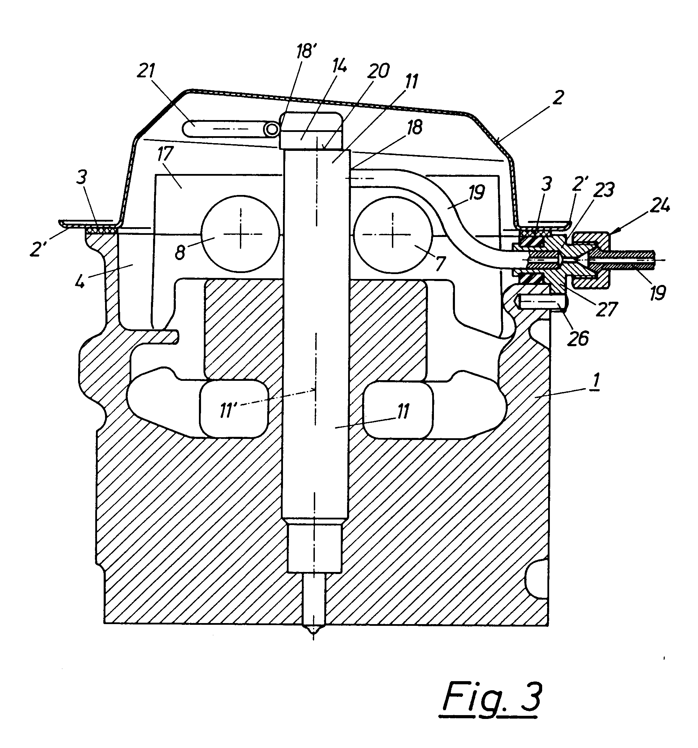

- Fig. 3: einen Schnitt nach der Linie III-III in Fig. 1 und

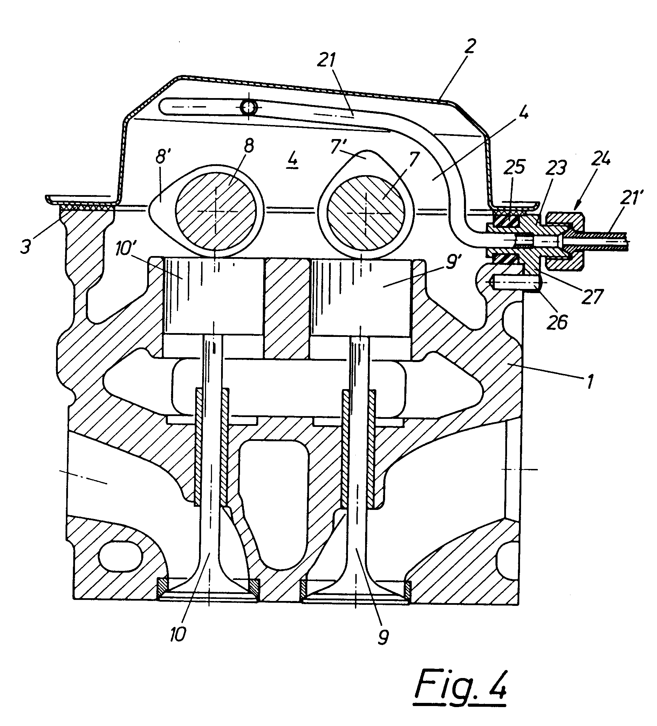

- Fig. 4: einen Schnitt nach der Linie IV-IV in Fig. 1.

In den Zeichnungen sind lediglich die erfindungswesentlichen Teile der Brennkraftmaschine dargestellt.

Durch den Zylinderkopf 1 (erster Bauteil) und den Zylinderkopfdeckel 2 (zweiter Bauteil) wird durch Zwischenfügung eines umlaufenden Dichtringes 3 der Ölraum 4 gebildet. Der umlaufende Dichtring 3 wird dabei zwischen den Rändern 1' des Zylinderkopfes 1 und den Rändern 2' des Zylinderkopfdeckels 2 mittels Befestigungsschrauben festgehalten, welche in die Schraublöcher 5 des Zylinderkopfes 1 eingesetzt werden. Der Zylinderkopf 1 ist in üblicher Weise mittels Zylinderkopfschrauben 6 am nicht dargestellten Zylinderblock bzw. am Kurbelgehäuse befestigt. Der Ölraum 4 wird von zwei Nockenwellen 7 und 8 durchsetzt, welche mit Nocken 7' und 8' je zwei gleichartigen Ventilen 9 bzw. 10 mit Stößeln 9' bzw. 10' zugeordnet sind.

Der Düsenhalter 11, dessen Achse 11' mit der ebenfalls nicht dargestellten Zylinderachse zusammenfällt, ist mit der Pratze 12 und den etwa in deren Mitte angreifenden Schraubbolzen 13 am Zylinderkopf 1 befestigt, wobei ein Ende 12' der Pratze 12 am Verbindungsteil 14 des Düsenhalters 11 und der andere Teil 12" der Pratze 12 auf der Mutter 15 der mittleren Befestigungsschraube 16 für den Nockenwellenlagerbügel 17 aufliegt.

Der Düsenhalter 11 weist einen Anschluß 18 für die Druckölleitung 19 und einen Anschluß 18' für die Leckölleitung 21 auf. Auf der Anschlußfläche 20 des Düsenhalters 11 ist der Verbindungsteil 14 aufgesteckt, der ein nicht dargestelltes Sackloch aufweist, welches mit der Leckölleitung 21 strömungsverbunden ist. Das Gegenstück zu diesem Sackloch bildet ein am Düsenhalter 11 angebrachter im wesentlichen zylindrischer Zapfen, welcher ebenfalls nicht dargestellt ist und der eine zentrische Bohrung aufweist, die im zusammengesteckten Zustand die Verbindung mit dem entsprechenden Anschluß 18' am Düsenhalter 11 und damit mit der Leckölleitung 21 herstellt.

Die Druckölleitung 19 und die Leckölleitung 21 durchsetzen im Abstand nebeneinander und knapp unterhalb des Randes 1' des Zylinderkopfes 1 die Seitenwand des Zylinderkopfes 1 je in einer U-förmigen Ausnehmung 22. Beide Leitungen 19 und 21 sind zu diesem Zweck am Ende mit je einem zylindrischen Nippel 23 versehen, welche an ihren außerhalb des Zylinderkopfes 1 gelegenen Teilen mit einem Gewinde für die Überwurfmutter-Verschraubung 24 für die Außenleitungen 19' und 21' versehen ist. An den zylindrischen Teilen der Nippel 23 sind elastische Dichtungsteile 25 angebracht, welche in der Form der U-förmigen Ausnehmung 22 entsprechen und diese im entspannten Zustand am Rand 1' geringfügig überragen. Nach Aufsetzen des Zylinder-kopfdeckels 2 liegen die elastischen Dichtungsteile 25 mit Spannung an allen Dichtflächen an. Es ist eine Verdrehsicherung für die Durchführungen vorgesehen, welche aus je einem Stift 26 im Zylinderkopf 1 und einem lappenförmigen Ansatz 27 des Nippels 23 bestehen. Die lappenförmigen Ansätze 27 weisen etwa U-förmige Schlitze 28 auf, mit welchen sie die Stifte 26 teilweise umgreifen.

Die Montage und Demontage dieser Rohrleitungsdurchführungen ist äußerst einfach, weil nur der Zylinderkopfdeckel montiert oder demontiert werden muß und nur die Überwurfmuttern 24 zur Lösung der äußeren Fortsetzungsleitungen, die Druckleitung 19' und die Leckölleitung 21' sowie die Pratze 12 durch Lösen der Mutter am Schraubbolzen 13 entfernt werden muß. Sodann kann die gesamte Rohrleitungsdurchführung einfach ausgehoben werden. Das Montieren geschieht umgekehrt durch einsetzen dieser Leitungsdurchführung in die U-förmigen Ausnehmungen 22, Festschrauben der Pratze 12 mittels der Mutter am Schraubbolzen 13 und Aufsetzen sowie Festschrauben des Zylinderkopfdeckels 2.

## Patentansprüche

1. Brennkraftmaschine mit einem durch einen ersten Bauteil und einem mit diesem lösbar verbundenen zweiten Bauteil gebildeten Ölraum (4) und einer aus dem Ölraum (4) führenden Rohrleitung (19, 21), welche eine Innenleitung (19, 21) und eine Außenleitung (19', 21') umfaßt, die über einen Nippel (23) miteinander verbunden sind, wobei die Außenleitung (19', 21') mittels einer Überwurfmutter-Verschraubung (24) am Nippel (23) befestigt ist, und wobei der Nippel (23) abgedichtet in einen Wanddurchbruch am Rande (1') des ersten Bauteils eingesetzt ist, **dadurch** **gekennzeichnet,** daß der Wanddurchbruch als U-förmige Ausnehmung (22), ausgehend vom Rand (1') des ersten Bauteiles, ausgebildet ist, daß am Nippel (23) ein zylindrisches, elastisches Dichtungsteil (25) mit einem U-förmigen Querschnitt in die entsprechende U-förmige Ausnehmung (22) des ersten Bauteiles eingesetzt und durch den korrespondierenden Rand (2') des zweiten Bauteiles festgehalten ist, und eine Sicherung gegen Verdrehen des Nippels (23) gegenüber dem ersten Bauteil vorgesehen ist.

2. Brennkraftmaschine nach Anspruch 1, **dadurch gekennzeich****net,** daß die Sicherung gegen Verdrehen des Nippels (23) gegenüber dem ersten Bauteil durch einen Stift (26) im ersten Bauteil und einen lappenförmigen Ansatz (27) des Nippels (23) mit einem den Stift (26) teilweise umgreifenden Schlitz (28) gebildet ist.

3. Brennkraftmaschine mit Selbstziindung nach Anspruch 1 oder 2, **dadurch gekennzeichnet**, daß der erste Bauteil ein Zylinderkopf (1) und der zweite Bauteil ein Zylinderkopfdeckel (2) ist, daß im Ölraum je eine Nockenwelle (7,8) zur Betätigung der Ein- und Auslaßventile (9,10) an beiden Seiten eines Düsenhalters (11) vorgesehen ist, dessen Druck- (19) und Leckölleitung (21) nebeneinander im Bereich der Nocken (7',8') zwischen Zylinderkopf (1) und - deckel (2) durchgeführt sind, wobei die Druckleitung (19) zwischen den Nocken (7',8') und die Leckölleitung (21) knapp über den Nocken (7',8') angeordnet sind.

## Claims

1. Internal combustion engine with an oil space (4) defined by a first component and a second component detachably connected to the first and a pipe connection (19,21) which leads from the oil space (4) and includes an inner pipe (19,21) and an external pipe (19',21'), connected together through a nipple (23), the external pipe (19',21') being secured to the nipple (23) by means of a union nut screwed joint (24) and the nipple (23) being inserted in a sealing manner in an opening in the wall at the edge (1') of the first component, characterised in that the opening in the wall is in the form of a U-shaped notch (22) leading from the edge (1') of the first component, that there is provided on the nipple (23) a cylindrical elastic sealing component (25) having a U-shaped cross-section and inserted in the correspondingly U-shaped notch (22) in the first component and secured by the corresponding edge (2') of the second component, and means being provided for securing the nipple (23) against rotation in relation to the first component.

2. Internal combustion engine according to claim 1, characterised in that the means for securing the nipple (23) against rotation in relation to the first component comprise a peg (26) in the first component and a tongue-like projection (27) on the nipple (23) with a slot (28) partially embracing the peg (26).

3. Compression-ignition internal combustion engine according to claim 1 or 2, characterised in that the first component is a cylinder head (1) and the second component a cylinder head cover (2), that there is provided in the oil space a respective camshaft (7,8) for actuating the inlet and exhaust valves (9,10) on both sides of a nozzle holder (11), of which the pressure oil pipe (19) and drainage oil pipe (21) are conducted between the cylinder head (1) and cover (2) side by side in the region of the cams (7',8'), the pressure pipe (19) being arranged between the cams (7',8') and the drainage oil pipe (21) immediately above the cams (7',8').

## Revendications

1. Moteur à combustion interne comprenant une chambre à huile (4) constituée d'un premier élément de construction et d'un deuxième élément de construction relié de façon amovible au premier et avec une canalisation principale (19, 21) venant de la chambre à huile (4), qui comprend une conduite intérieure (19, 21) et une conduite extérieure (19', 21'), qui sont reliées ensemble par un manchon fileté (23), la conduite extérieure (19', 21') étant fixée par vissage au moyen d'un écrou d'accouplement (24) au manchon (23), et le manchon fileté (23) étant rendu étanche et inséré dans un percement de la paroi sur le bord (1') du premier élément de construction, caractérisé en ce que le perçage de la paroi est réalisé sous forme d'un évidement (22) en forme de U, à partir du bord 1' du premier élément de construction ; sur le manchon (23) est insérée une pièce d'étanchéité (25) cylindrique, élastique ayant une section transversale en forme de U, dans l'évidement en forme de U correspondant (22) du premier élément de construction et elle est maintenue fixe par le bord correspondant (2') du deuxième élément de construction et une sécurité anti-rotation du manchon (23) est prévue vis-à-vis du premier élément de construction.

2. Moteur à combustion interne selon la revendication 1, caractérisé en ce que la sécurité anti-rotation du manchon (23) vis-à-vis du premier élément de construction est réalisée par une cheville (26) insérée dans le premier élément de construction et une saillie (27) en forme de lèvres du manchon fileté (23) ayant une rainure (28) entourant partiellement la cheville (26).

3. Moteur à combustion interne à allumage spontané selon la revendication 1 ou la revendication 2, caractérisé en ce que : le premier élément de construction est une culasse (1) et le deuxième élément de construction est un couvercle de culasse (2) ; dans la chambre à huile est prévu un arbre à cames (7, 8) pour actionner respectivement les soupapes d'admission et les soupapes d'échappement (9, 10) des deux côtés d'un porte-injecteur (11), dont la canalisation sous pression d'huile (19) et la conduite de retour d'huile de fuite (21) sont réalisées l'une à côté de l'autre dans la zone des cames (7', 8') entre la culasse (1) et le couvercle de culasse (2), la canalisation sous pression (19) étant placée entre les cames (7', 8') et la canalisation de retour d'huile de fuite (21) étant disposée juste au-dessus des cames (7', 8').
